# FASCICULE DE BREVET EUROPEEN

(11) **EP 3 377 371 B1**
(45) Date de publication et mention de la délivrance du brevet: **10.06.2020**
(21) Numéro de dépôt: 16805306.4
(22) Date de dépôt: 09.11.2016
(51) Int. Cl.: B60Q 3/43, F21S 8/02, F21V 3/02, F21V 7/00, F21V 7/22, F21V 3/06, B64D 11/00, F21Y 103/00, F21Y 103/10, F21Y 115/10, F21W 106/00, F21V 13/02

(54) **SYSTEME D'ECLAIRAGE POUR VEHICULE ET VEHICULE MUNI D'UN TEL SYSTEME**
BELEUCHTUNGSSYSTEM FÜR EIN FAHRZEUG UND FAHRZEUG MIT SOLCH EINEM SYSTEM
LIGHTING SYSTEM FOR A VEHICLE AND VEHICLE PROVIDED WITH SUCH A SYSTEM

(30) Priorité: 16.11.2015 FR 1560985
(43) Date de publication de la demande: 26.09.2018
(73) Titulaire: Bluebus, 29500 Ergue Gaberic (FR)
(72) Inventeur: SAUVAGET, Thierry, 69780 Toussieu (FR)
(74) Mandataire: IPAZ
(86) Numéro de dépôt international: PCT/EP2016/077115
(87) Numéro de publication internationale: WO 2017/084939

(56) Documents cités:
- EP-A1- 0 656 281
- WO-A1-86/02138
- WO-A1-2013/010579
- CH-A5- 664 817
- DE-A1- 3 712 060
- DE-A1-102006 042 648
- JP-A- 2005 193 804
- US-A- 2 337 794
- US-A- 2 456 166
- US-A1- 2015 049 476

## Description

La présente invention concerne un système d'éclairage pour véhicule, en particulier de transport en commun, en particulier terrestre, et encore plus particulièrement sur route, de type bus ou tram-bus. Elle concerne également un véhicule, en particulier de transport en commun, en particulier terrestre, et encore plus particulièrement sur route, de type bus ou tram-bus comprenant un tel système d'éclairage.

Le domaine de l'invention est le domaine des systèmes d'éclairage pour véhicules de transport en commun, en particulier des véhicules de transport en commun terrestre, en particulier sur route, de type bus, car ou tram-bus.

Les documents US 2015/0049476 A1 et DE 10 2006 042 648 A1 décrivent des systèmes d'éclairage indirects connus appartenant au domaine de l'invention. Les documents US 2,337,794 et EP 0 656 281 A1 décrivent quant à eux des systèmes d'éclairage partiellement directs et partiellement indirects.

### Etat de la technique

Les habitacles de véhicules de transport en commun, de type bus ou tram-bus, comprennent généralement un ou plusieurs compartiments techniques accessibles depuis l'intérieur dudit habitacle. L'un de ces compartiments, en particulier disposé au niveau d'une jonction entre la paroi latérale et la paroi supérieure du bus, est utilisé pour abriter un système d'éclairage de l'habitacle du véhicule, lorsque la luminosité extérieure diminue. Certains compartiments utilisés pour l'éclairage comportent une cloison de diffusion protégeant les sources lumineuses.

Alternativement, l'éclairage de l'habitacle peut aussi être assuré par une ou plusieurs sources lumineuses directement logées dans une paroi supérieure de l'habitacle, sans utilisation d'un compartiment technique.

Quelle que soit la solution mise en œuvre, le système d'éclairage comporte plusieurs sources lumineuses. Chaque source lumineuse est composée d'une ampoule orientée suivant une direction donnée, réalisant un éclairage direct, ou d'un tube au néon, réalisant un éclairage agressif.

Cependant, les solutions d'éclairage actuellement utilisées dans les véhicules de transport en commun, en particulier sur route, ne permettent pas de réaliser un éclairage satisfaisant. L'éclairage obtenu pour les systèmes actuels est peu ergonomique et non uniforme. De plus, il arrive fréquemment que le niveau d'éclairage obtenu soit agressif pour les usagers voyageant debout dans l'habitacle, et insuffisant pour ceux voyageant assis.

Un but de la présente invention est de remédier à ces inconvénients.

Un autre but de l'invention est de proposer un système d'éclairage pour un véhicule permettant d'obtenir un éclairage plus ergonomique.

Il est aussi un autre but de l'invention de proposer un système d'éclairage pour un véhicule permettant d'obtenir un niveau d'éclairage plus adapté et plus uniforme dans l'ensemble de l'habitacle dudit véhicule.

### Exposé de l'invention

L'invention permet d'atteindre au moins l'un de ces buts par un système d'éclairage indirect tel que défini dans la revendication 1.

Ce système d'éclairage indirect est conçu pour éclairer un habitacle d'un véhicule, en particulier de transport en commun, en particulier terrestre, et encore plus particulièrement sur route, le système d'éclairage comprenant :
- au moins une surface réfléchissante dirigée vers ledit habitacle, et
- au moins une source de lumière dirigée vers ladite surface réfléchissante,
de sorte que le rayonnement lumineux émis par ladite au moins une source est réfléchi par ladite surface réfléchissante et renvoyé vers ledit habitacle.

Ainsi, l'invention propose un système d'éclairage pour véhicule de transport en commun, en particulier sur route, réalisant un éclairage indirect de l'habitacle, grâce à une surface réfléchissante elle-même éclairée par une ou plusieurs sources. L'éclairage ainsi obtenu est moins agressif pour les voyageurs, plus uniforme et plus efficace. Dans le véhicule selon l'invention, les sources lumineuses ne sont pas dirigées directement vers l'habitacle, ce qui évite un éclairage trop localisé, trop agressif pour les voyageurs et non-uniforme, tel que c'est le cas dans les véhicules de l'état de la technique.

Le système selon l'invention permet de réaliser une diffusion volumique de l'éclairage dans l'habitacle, ce qui est moins agressif, plus agréable, plus uniforme et plus efficace comparé à l'éclairage ponctuel réalisé dans les véhicules actuels.

Le système d'éclairage du véhicule selon l'invention comprend une cloison, dite diffuseur, transparente ou translucide, disposée en regard de la surface réfléchissante et traversée par le rayonnement lumineux réfléchi par ladite surface réfléchissante.

Un tel diffuseur permet de protéger les sources lumineuses et/ou la surface réfléchissante, tout en rendant l'éclairage obtenu encore plus uniforme. De plus, en modifiant les caractéristiques du diffuseur, telle que par exemple sa forme ou son épaisseur ou encore sa transparence, il est possible d'adapter et d'ajuster la répartition du rayonnement lumineux dans l'habitacle en fonction des directions.

Avantageusement, le diffuseur peut comporter une partie centrale recourbée fuyant la surface réfléchissante.

Une telle forme de la partie centrale permet de réaliser une meilleure distribution de la lumière provenant de la surface réfléchissante dans l'ensemble de l'habitacle.

Suivant une caractéristiques préférée, le diffuseur peut être replié sur au moins un des ses côtés, de sorte à former un chanfrein se dirigeant vers la surface réfléchissante.

Préférentiellement, le diffuseur peut être replié au niveau de chacun de ses côtés. Dans ce cas, le diffuseur comporte un chanfrein sur chacun de ses côtés. Un tel chanfrein constitue une zone de diffusion du rayonnement lumineux provenant de la surface réfléchissante, vers les côtés de l'habitacle, qui sont, habituellement, les zones les moins bien éclairées dans les habitacles des véhicules de l'état de la technique.

Suivant un exemple de réalisation nullement limitatif, au moins un chanfrein forme un angle compris entre 40° et 60° avec une partie centrale du diffuseur et/ou avec la surface réfléchissante, et plus particulièrement un angle de 50°.

Suivant une caractéristique particulièrement préférée, au moins un, en particulier chaque, chanfrein du diffuseur présente une transparence supérieure au reste du diffuseur, en particulier à une partie centrale dudit diffuseur, de sorte que le diffuseur réalise un éclairage plus fort au niveau dudit chanfrein.

Ainsi, il est possible d'avoir un éclairage plus fort sur les côtés de l'habitacle, c'est-à-dire les zones se trouvant au niveau des parois latérales, et un éclairage plus faible au niveau de la partie centrale de l'habitacle. Ainsi, les utilisateurs voyageant assis bénéficient d'un éclairage plus fort, sans agresser les voyageurs se trouvant en partie centrale et qui voyagent généralement debout, ces derniers bénéficiant alors d'un éclairage plus doux.

La différence de transparence peut, par exemple, être obtenue par une différence d'épaisseur. Plus particulièrement, au moins un chanfrein peut présenter une épaisseur plus faible comparée au reste du diffuseur, et en particulier comparée à la partie centrale du diffuseur, de sorte à présenter une plus grande transparence.

Alternativement ou en plus, la différence de transparence peut être obtenue par un traitement de surface diminuant la transparence de la partie centrale du diffuseur comparée à au moins un chanfrein, tel que par exemple le dépôt d'une couche de peinture ou d'un produit diminuant la transparence de la partie centrale du diffuseur.

Alternativement ou en plus, la différence de transparence peut être obtenue en utilisant un matériau présentant une plus grande transparence pour réaliser les chanfreins.

Le diffuseur peut en particulier être réalisé en verre ou en plastique, au moins en partie transparent ou translucide.

Préférentiellement, le système d'éclairage du véhicule selon l'invention peut se présenter sous la forme d'une rampe longitudinale. Avantageusement, la rampe longitudinale peut se prolonger sensiblement sur la majeure partie de l'habitacle du véhicule, en particulier au niveau d'une zone centrale de la paroi supérieure, et encore plus particulièrement dans un compartiment aménagé à cet effet sur, ou dans, la paroi supérieure.

Un tel agencement permet de concevoir une ossature de véhicule dans laquelle les parties hautes des parois latérales du véhicule sont libérées et peuvent ainsi comporter des claires-voies ou des vitres, de sorte que la luminosité naturelle de l'habitacle est également améliorée.

En particulier, le système selon l'invention peut comprendre deux rangées de sources lumineuses, chaque rangée comprenant plusieurs sources lumineuses alignées les unes avec les autres et se prolongeant dans le sens longitudinal du véhicule.

De plus, les deux rangées peuvent être disposées de part et d'autre de la surface réfléchissante.

Lesdites deux rangées peuvent en outre être parallèles entres elles, en particulier sur la majeure partie de la rampe longitudinale, et se rejoindre au niveau d'au moins une, en particulier de chacune, de leurs extrémités.

Avantageusement, deux sources adjacentes d'une même rangée peuvent être séparées d'un pas d'écartement longitudinal inférieur ou égal au diamètre du faisceau lumineux émis par chaque source et mesuré au niveau du diffuseur.

Ainsi, le système selon l'invention permet d'obtenir un éclairage continu suivant la direction longitudinale, à partir de sources lumineuses ponctuelles, car les faisceaux lumineux des sources lumineuses se recouvrent suivant cette direction longitudinale.

Il est alors possible d'utiliser des sources lumineuses basse consommation, basse température, etc., tel que par exemple de type LED.

De plus, les deux rangées de sources lumineuses peuvent être séparées l'une de l'autre d'un pas d'écartement transversal inférieur ou égal au diamètre du faisceau lumineux émis par chaque source et mesuré au niveau du diffuseur.

Ainsi, le système selon l'invention permet d'obtenir un éclairage continu suivant la direction transversale, à partir de sources lumineuses ponctuelles, car les faisceaux lumineux des sources lumineuses se recouvrent suivant cette direction transversale.

Préférentiellement, les deux rangées de sources lumineuses peuvent être séparées l'une de l'autre d'une distance égale à la distance séparant deux sources adjacentes d'une même rangée.

Ainsi, la continuité de l'éclairage obtenu est identique suivant les directions transversale et longitudinale.

Cette/ces caractéristique(s) d'écartement permettent d'obtenir un éclairage continu à partir de sources ponctuelles. Ainsi, l'invention permet d'utiliser des sources lumineuses basse tension, basse consommation et basse température, tout en bénéficiant d'un éclairage continu dans l'habitacle.

Préférentiellement, au moins une source lumineuse peut être dirigée vers la surface réfléchissante suivant un angle compris entre 30° et 50° par rapport à la surface réfléchissante, et en particulier un angle de 40°.

Suivant un exemple de réalisation nullement limitatif, la surface réfléchissante peut être réalisée en un revêtement réfléchissant blanc.

Plus particulièrement, le revêtement blanc peut être obtenu par dépôt d'une peinture blanche.

Au moins une source lumineuse peut être formée par une LED ou un ensemble de LEDs, ou tout autre émetteur de lumière, en particulier ponctuel.

Plus généralement, le système selon l'invention permet d'obtenir un éclairage central unique pour tous les passagers, à la fois pour les passagers se trouvant au niveau d'une zone centrale de l'habitacle, par exemple dans une position debout, et pour les passagers se trouvant au niveau des parois latérales de l'habitacle, par exemple dans une position assise.

Suivant un autre aspect de l'invention, il est proposé un véhicule, en particulier de transport en commun, comprenant un système d'éclairage selon l'invention.

Avantageusement, le système d'éclairage peut être agencé sur une paroi supérieure de l'habitacle du véhicule, en particulier au niveau d'une partie centrale de ladite paroi supérieure dans le sens de la largeur dudit véhicule.

Ainsi, il est possible de réaliser un éclairage uniforme de l'ensemble de l'habitacle, à partir d'une unique zone, sans avoir à prévoir deux zones d'éclairage tel que c'est le cas dans certains véhicules de l'état de la technique. Le système d'éclairage du véhicule et son installation dans l'habitacle se trouvent simplifiés, son coût et son encombrement diminués.

Le système d'éclairage selon l'invention peut être agencé dans un compartiment prévu dans l'habitacle, en particulier sur ou dans, une paroi supérieure de l'habitacle, avec ou sans utilisation d'un compartiment spécifique.

Lorsque le système d'éclairage est disposé dans un compartiment technique, en particulier aménagé sur/dans une paroi supérieure, et encore plus particulièrement au niveau d'une zone centrale de la paroi supérieure, alors le diffuseur peut avantageusement former un capot pour au moins une partie, en particulier la totalité, dudit compartiment.

Le capot peut être agencé pour fermer totalement ou en partie ledit compartiment.

Préférentiellement, le capot réalise une fermeture totale du compartiment.

De plus, le capot peut être amovible ou démontable.

En particulier, le capot peut être prévu rotatif, en particulier autour d'un axe de rotation longitudinal, entre une position fermée, interdisant l'accès à l'intérieur dudit compartiment, et une position ouverte, laissant accès à l'intérieur dudit compartiment.

Lorsque le système d'éclairage est disposé dans un compartiment technique, la surface réfléchissante peut former un fond du compartiment technique, vu de l'habitacle.

Lorsque le système d'éclairage est disposé dans un compartiment technique, les sources lumineuses peuvent être agencées de part et d'autre de la surface réfléchissante, en particulier sur des parois latérales du compartiment technique.

Préférentiellement, le compartiment technique peut être longitudinal.

De plus, le compartiment technique peut être arrondi au niveau de chacune de ses extrémités avant et arrière, dans le sens de la longueur du véhicule.

Le véhicule selon l'invention peut être un véhicule électrique.

De plus, le véhicule selon l'invention peut être un véhicule de transport en commun.

Le véhicule selon l'invention peut être un véhicule terrestre, en particulier sur route.

Alternativement, le véhicule selon l'invention peut être un véhicule aérien, tel qu'un avion, ou un véhicule marin, tel qu'un bateau.

Selon une version préférée, le véhicule selon l'invention peut être un bus, ou un car, ou encore un tram-bus, en particulier électrique.

Par « tram-bus », on entend un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

Le véhicule électrique peut comporter un ou plusieurs modules de stockage d'énergie électrique rechargeables, disposés dans un compartiment technique prévu dans la paroi supérieure et/ou en partie arrière du véhicule.

Chaque module de stockage d'énergie électrique peut comprendre une ou plusieurs batteries et/ou une ou plusieurs supercapacités.

### Description des figures et modes de réalisation

D'autres avantages et caractéristiques apparaîtront à l'examen de la description détaillée d'un mode de réalisation nullement limitatif, et des dessins annexés sur lesquels :
- les FIGURES 1 et 2 sont des représentations schématiques partielles simplifiées d'un premier exemple d'un véhicule selon l'invention équipé d'un système d'éclairage selon l'invention, selon une vue en coupe transversale ;
- les FIGURES 3 et 4 sont des représentations schématiques partielles simplifiées d'un deuxième exemple d'un véhicule selon l'invention équipé d'un système d'éclairage selon l'invention ; et
- la FIGURE 5 est une représentation schématique de l'exemple de la FIGURE 1 selon une vue en coupe longitudinale.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures les éléments communs à plusieurs figures conservent la même référence.

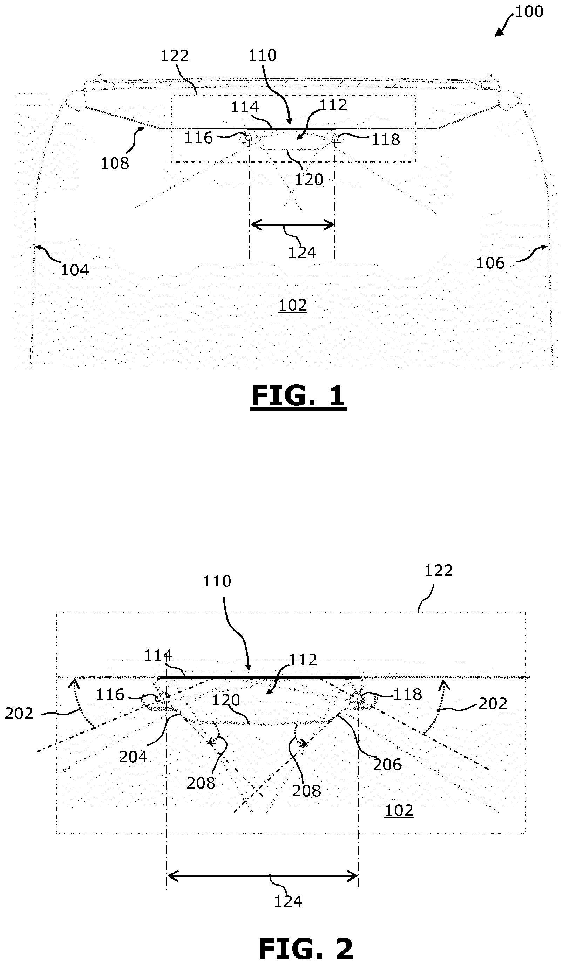

La FIGURE 1 est une représentation schématique partielle d'un premier exemple de réalisation non limitatif d'un véhicule selon l'invention, selon une vue en coupe transversale.

Le véhicule 100 est représenté sur la FIGURE 1, de manière très simplifiée, suivant une vue en coupe selon un plan de coupe perpendiculaire à la direction longitudinale du véhicule, en vue de faciliter la compréhension.

Le véhicule 100 comprend un habitacle 102 délimité par deux parois latérales longitudinales 104 et 106 sensiblement verticales, une paroi inférieure (non représentée) et une paroi supérieure 108 sensiblement horizontales. Sur la FIGURE 1, la paroi arrière, respectivement la paroi avant, délimitant l'habitacle à l'arrière, respectivement à l'avant, ne sont pas représentées.

Le véhicule 100 comprend un système d'éclairage 110 de l'habitacle 102, agencé dans un compartiment technique 112 longitudinal prévu sur la paroi supérieure 108 de l'habitacle 102.

Le système d'éclairage 110 comprend une surface réfléchissante 114 formant le fond du compartiment technique 112 vu depuis l'habitacle 102. La surface réfléchissante 114 est formée par un revêtement réfléchissant déposé, par exemple, sur le fond du compartiment technique 114. Le revêtement est de préférence une peinture blanche, par exemple de référence RAL 9003 mat poudre.

Le système d'éclairage 110 comprend en outre une première rangée de sources lumineuses 116 et une deuxième rangée de sources lumineuses 118, longitudinales, sensiblement parallèles entre-elles et se rejoignant au niveau de chacune des extrémités du compartiment technique. Chaque rangée de sources lumineuses forme une rampe lumineuse. Chaque source lumineuse 116 et 118 de chaque rangée est disposée en regard de la surface réfléchissante 114 de sorte que le rayonnement lumineux émis par chaque source lumineuse 116 et 118 est réfléchi par la surface réfléchissante 114.

Le système d'éclairage 100 comprend par ailleurs un diffuseur 120, au moins en partie translucide ou transparent, formant un capot pour le compartiment technique 112. Le diffuseur 120 est prévu amovible, de sorte qu'il peut être enlevé pour accéder à l'intérieur du compartiment technique 112.

Le compartiment technique 112, et par conséquent le système d'éclairage 110, est agencé sensiblement au centre de la paroi supérieure 108 de l'habitacle 102.

Les rangées de sources lumineuses 116 et 118 sont séparées entre-elles par un pas d'écartement transversal 124 compris entre 370mm et 430mm, en particulier égal à 400mm. Avantageusement, ce pas d'écartement transversal 124 est inférieur ou égal au diamètre du rayonnement émis par chaque source 116 et 118, mesuré au niveau du diffuseur 120. Ainsi, le système selon l'invention permet d'obtenir un éclairage continu à partir de sources lumineuses ponctuelles.

La FIGURE 2 est un agrandissement d'une zone de la FIGURE 1 comprenant le système d'éclairage 110.

Tel que représenté sur la FIGURE 2, chaque source lumineuse 116, respectivement 118, est dirigée vers la surface réfléchissante 114 suivant un angle 202 de valeur absolue 40°. Autrement dit, chaque source lumineuse émet un rayonnement lumineux dont la direction principale forme avec la surface réfléchissante un angle de 40°. Chaque source lumineuse 116 est agencée dans un logement aménagé dans une première paroi latérale du compartiment 112 et chaque source lumineuse 118 est agencée dans un logement aménagé dans une deuxième paroi latérale du compartiment 112 opposée à la première paroi latérale, de manière symétrique.

Chaque source lumineuse 116, 118 peut être réalisée par une LED ou un ensemble de LEDs alimenté par un circuit électrique non représenté sur les FIGURES.

Le diffuseur 120 est recourbé sur chacun de ses côtés opposés de sorte qu'il comporte un chanfrein 204 et 206 sur chacun de ses côtés opposés. Chaque chanfrein 204 et 206 forme avec la partie centrale du diffuseur 120 un angle 208 égal à 50°. Dans l'exemple non limitatif représenté sur la FIGURE 2, chaque chanfrein 204 et 206 forme aussi un angle de 50° avec la surface réfléchissante 114.

Chaque chanfrein 204 et 206 du diffuseur 120 peut présenter une transparence supérieure au reste du diffuseur 120, en particulier comparée à la partie centrale dudit diffuseur 120, de sorte que le diffuseur 120 réalise un éclairage plus fort au niveau de chaque chanfrein 204 et 206. Ainsi, il est possible d'avoir un éclairage plus fort sur les côtés de l'habitacle 102, c'est-à-dire les zones se trouvant au niveau des parois latérales 104 et 106, et un éclairage plus faible au niveau de la partie centrale de l'habitacle 102. Ainsi, les utilisateurs voyageant assis bénéficient d'un éclairage plus fort, sans agresser les voyageurs se trouvant en partie centrale et qui voyagent généralement debout, ces derniers bénéficiant alors d'un éclairage plus doux.

Le diffuseur 120 peut être réalisé en tout matériau transparent ou translucide, par exemple en plastique ou en verre.

Dans le présent exemple, la différence de transparence de chaque chanfrein 204 et 206 est obtenue par une différence d'épaisseur. Autrement dit, chaque chanfrein 204 et 206 présente une épaisseur plus faible comparée au reste du diffuseur 120 et en particulier à la partie centrale du diffuseur 120, de sorte qu'il est plus transparent.

Cette différence d'épaisseur est obtenue, par exemple, lors de la fabrication, par moulage, du diffuseur 120, à partir d'une plaque d'épaisseur constante et d'un moule présentant la forme souhaitée du diffuseur 120. Lors de la montée de la plaque sur le moule, la plaque initialement plane va prendre la forme du moule. Or, le moule présentant une pente pour former chaque chanfrein, la matière va avoir tendance, du fait de la gravité, à s'accumuler sur les surfaces planes et à s'étirer sur les surfaces pentues. Ce phénomène provoque une diminution de l'épaisseur au niveau de chaque chanfrein 204 et 206.

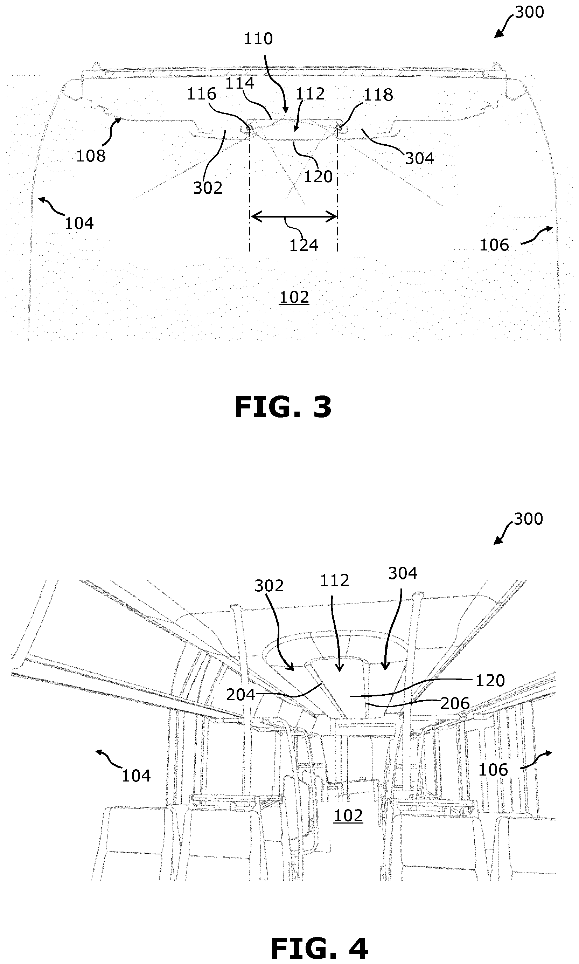

La FIGURE 3 est une représentation schématique partielle d'un deuxième exemple de réalisation non limitatif d'un véhicule selon l'invention, selon une vue en coupe transversale.

Le véhicule 300 est représenté sur la FIGURE 3, de manière très simplifiée, suivant une vue en coupe selon un plan de coupe perpendiculaire à la direction longitudinale du véhicule, en vue de faciliter la compréhension.

Le véhicule 300 comprend tous les éléments du véhicule 100 décrit sur la FIGURE 1.

En plus, le véhicule 300 comprend deux compartiments techniques 302 et 304 additionnels, disposés de part et d'autre du compartiment technique 112 comprenant le système d'éclairage 110.

Les compartiments techniques 302 et 304 peuvent être utilisés pour y faire passer les câbles électriques alimentant chaque source lumineuse 116 et 118. Les compartiments techniques 302 et 304 peuvent en plus ou alternativement être utilisés comme conduits d'aération de l'habitacle 102 du véhicule 300.

La FIGURE 4 est une représentation schématique du véhicule suivant une vue isométrique depuis l'intérieur de l'habitacle du véhicule 300 de la FIGURE 3, vers l'avant.

Comme représenté sur la FIGURE 1, le compartiment technique longitudinal 112 est arrondi au niveau de chacune des extrémités avant et arrière. De plus, les compartiments techniques 302 et 304 se rejoignent entre eux au niveau de chacune des extrémités avant et arrière du compartiment technique 112.

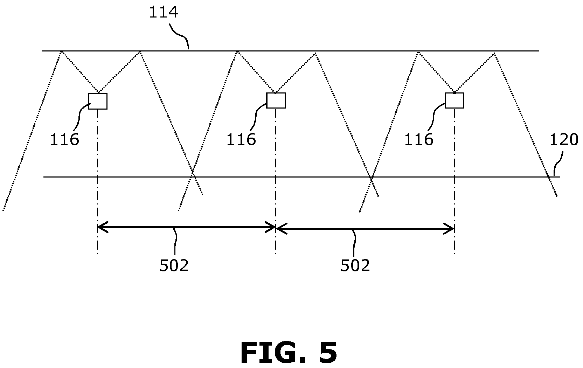

La FIGURE 5 est une représentation schématique partielle de l'exemple de réalisation de la FIGURE 1, selon une vue en coupe longitudinale.

La FIGURE 5 montre la surface réfléchissante 114, le diffuseur 120 et la rangée de sources lumineuses 116. Cette rangée comprend plusieurs sources lumineuses 116.

Deux sources lumineuses adjacentes 116 sont séparées l'une de l'autre par un pas d'écartement longitudinal 502, compris entre 15mm-20mm, en particulier égal à 18mm.

Avantageusement, ce pas d'écartement longitudinal 502 est inférieur ou égal au diamètre du rayonnement émis par chaque source 116, mesuré au niveau du diffuseur 120.

Préférentiellement, le pas d'écartement longitudinal 502 est inférieur au pas d'écartement transversal 124.

Bien entendu, ce qui vient d'être décrit pour la rangée de sources lumineuses 116 peut être appliqué à la rangée de sources lumineuses 118.

Suivant un exemple de réalisation nullement limitatif, le compartiment technique longitudinal 112 peut présenter :
- une hauteur de l'ordre de 100 mm,
- une longueur de l'ordre de 5500mm, et
- une largeur de l'ordre de 370mm, au niveau du diffuseur 120.

Le véhicule 100 ou 300 peut être un bus électrique, ou un tram-bus électrique, comprenant un ou plusieurs modules de stockage d'énergie électrique rechargeables. Chaque module de stockage d'énergie électrique peut comprendre une ou plusieurs batteries ou supercapacités.

Bien entendu, l'invention n'est pas limitée aux exemples détaillés ci-dessus. Par exemple, le système d'éclairage selon l'invention peut être appliqué à un avion ou un bateau, en particulier de transport en commun.

Il est également possible d'utiliser le système d'éclairage selon l'invention, non pas dans un véhicule, mais pour l'éclairage d'une pièce ou d'un couloir dans un lieu d'habitation ou dans lieu professionnel, en remplaçant l'habitacle du véhicule par le couloir ou la pièce à éclairer.

## Revendications

1. Système d'éclairage indirect (110) pour éclairer un habitacle (102) d'un véhicule (100;300), ledit système d'éclairage (110) comprenant :
- au moins une surface réfléchissante (114) dirigée vers ledit habitacle (102),
- au moins une source (116,118) de lumière dirigée vers ladite surface réfléchissante (114) de sorte que le rayonnement lumineux émis par ladite au moins une source (116,118) est réfléchi par ladite surface réfléchissante (114) et renvoyé vers ledit habitacle (102), et
- au moins une cloison (120), au moins en partie transparente ou translucide, disposée en regard de la surface réfléchissante (114) et traversée par le rayonnement lumineux réfléchi par ladite surface réfléchissante (114), ladite cloison (120) comportant une partie centrale transparente ou translucide et, sur au moins un des ses côtés, une portion latérale recourbée ou repliée vers la surface réfléchissante (114) ;
**caractérisé en ce que** chaque portion latérale recourbée ou repliée (204,206) de la cloison (120) présente une transparence supérieure au reste de ladite cloison (120), de sorte que la cloison (120) réalise un éclairage plus fort au niveau de chaque portion latérale recourbée ou repliée (204,206).

2. Système (110) selon la revendication précédente, **caractérisé en ce que** la cloison (120) comporte une partie centrale recourbée fuyant la surface réfléchissante (114).

3. Système (110) selon la revendication précédente, **caractérisé en ce qu'**au moins une portion latérale pliée (204,206) forme un angle (208) compris entre 40° et 60°, et en particulier un angle de 50°, avec une partie centrale de la cloison (120) et/ou avec la surface réfléchissante (114).

4. Système (110) selon l'une quelconque des revendications précédentes, **caractérisé en ce que** la cloison (120) est réalisée en verre ou en plastique, au moins en partie transparent ou translucide.

5. Système (110) selon l'une quelconque des revendications précédentes, **caractérisé en ce que** ledit système se présente sous la forme d'une rampe longitudinale.

6. Système (110) selon l'une quelconque des revendications précédentes, **caractérisé en ce qu'**il comprend deux rangées de sources lumineuses (116,118), chaque rangée comprenant plusieurs sources lumineuses (116,118) alignées les unes avec les autres et se prolongeant dans le sens longitudinal du véhicule.

7. Système (110) selon la revendication précédente, **caractérisé en ce que** les deux rangées de sources lumineuses (116,118) sont disposées de part et d'autre de la surface réfléchissante (114).

8. Système (110) selon l'une quelconque des revendications 6 ou 7, **caractérisé en ce que** les deux rangées de sources lumineuses (116,118) sont parallèles entre elles et se rejoignent au niveau d'au moins une, en particulier de chacune de leur extrémités.

9. Système (110) selon l'une quelconque des revendications 6 à 8, **caractérisé en ce que** deux sources adjacentes (116,118) d'une même rangée sont séparées d'un pas d'écartement longitudinal (502) inférieur ou égal au diamètre du faisceau lumineux émis par chaque source lumineuse (116,118) et mesuré au niveau de la cloison (120).

10. Système (110) selon l'une quelconque des revendications 6 à 9, **caractérisé en ce que** les deux rangées de sources lumineuses (116,118) sont séparées l'une de l'autre d'un pas d'écartement transversal (124) inférieur ou égal au diamètre du faisceau lumineux émis par chaque source (116,118) et mesuré au niveau de la cloison (120).

11. Système (110) selon l'une quelconque des revendications 6 à 10, **caractérisé en ce que** les deux rangées de sources lumineuses (116,118) sont séparées l'une de l'autre d'une distance (124) égale à la distance (502) séparant deux sources (116,118) adjacentes d'une même rangée.

12. Système (110) selon l'une quelconque des revendications précédentes, **caractérisé en ce qu'**au moins une source lumineuse (116,118) est dirigée vers la surface réfléchissante (114) suivant un angle compris entre 30° et 50°, en particulier suivant un angle de 40°, par rapport à ladite surface réfléchissante (114).

13. Système (110) selon l'une quelconque des revendications précédentes, **caractérisé en ce que** la surface réfléchissante (114) est réalisée en un revêtement réfléchissant blanc.

14. Système (110) selon la revendication précédente, **caractérisé en ce que** le revêtement blanc est obtenu par dépôt d'une peinture blanche.

15. Système (110) selon l'une quelconque des revendications précédentes, **caractérisé en ce qu'**au moins une source lumineuse (116,118) est formée par une LED ou un ensemble de LEDs.

16. Véhicule (100;300), en particulier de transport en commun, comprenant un système d'éclairage (110) selon l'une quelconque des revendications précédentes.

17. Véhicule (100;300) selon la revendication précédente, **caractérisé en ce que** le système d'éclairage (110) est agencé sur une paroi supérieure (108) de l'habitacle (102), en particulier au niveau d'une partie centrale de ladite paroi supérieure (108) dans le sens de la largeur dudit véhicule (100;300).

18. Véhicule (100;300) selon l'une quelconque des revendications 16 ou 17, **caractérisé en ce que** le système d'éclairage (110) est agencé dans un compartiment (112) prévu dans l'habitacle (102), en particulier sur/dans une paroi supérieure (108) de l'habitacle (102).

19. Véhicule (100;300) selon la revendication précédente, **caractérisé en ce que** la cloison (120) forme un capot pour au moins une partie du compartiment (112).

20. Véhicule (100;300) selon l'une quelconque des revendications 18 ou 19, **caractérisé en ce que** la surface réfléchissante (114) forme un fond du compartiment (112), vu de l'habitacle (102).

21. Véhicule (100;300) selon l'une quelconque des revendications 18 à 20, **caractérisé en ce que** le compartiment (112) est longitudinal et arrondi au niveau de chacune de ses extrémités avant et arrière, dans le sens de la longueur du véhicule (100;300).

22. Véhicule (100;300) selon l'une quelconque des revendications 16 à 21, **caractérisé en ce qu'**il s'agit d'un bus, ou d'un car, ou encore d'un tram-bus, en particulier électrique.

23. Véhicule (100;300) selon l'une quelconque des revendications 16 à 21, **caractérisé en ce qu'**il s'agit d'un avion, en particulier électrique, ou d'un bateau, en particulier électrique.

## Patentansprüche

1. Beleuchtungssystem (110) zur indirekten Beleuchtung eines Innenraums (102) eines Fahrzeugs (100; 300), wobei das Beleuchtungssystem (110) umfasst:
- mindestens eine reflektierende Fläche (114), die dem Innenraum (102) zugewandt ist,
- mindestens eine Lichtquelle (116, 118), die der reflektierenden Fläche (114) derart zugewandt ist, sodass die von der mindestens einen Quelle (116, 118) abgegebene Lichtstrahlung von der reflektierenden Fläche (114) reflektiert und zum Innenraum (102) hin zurückgestrahlt wird, und
- mindestens eine zumindest teilweise durchsichtige oder durchscheinende Wand (120), welche gegenüber der reflektierenden Fläche (114) angeordnet ist und durch welche die Lichtstrahlung hindurch verläuft, die von der reflektierenden Fläche (114) reflektiert wird, wobei die Wand (120) einen durchsichtigen oder durchscheinenden Mittelteil und, auf mindestens einer ihrer Seiten, einen zur reflektierenden Fläche (114) gebogenen oder geklappten Seitenabschnitt beinhaltet;
**dadurch gekennzeichnet, dass** jeder gebogene oder geklappte Seitenabschnitt (204, 206) der Wand (120) eine höhere Durchsichtigkeit als der Rest der Wand (120) derart aufweist, sodass die Wand (120) eine stärkere Beleuchtung an jedem gebogenen oder geklappten Seitenabschnitt (204, 206) erzeugt.

2. System (110) nach dem vorhergehenden Anspruch, **dadurch gekennzeichnet, dass** die Wand (120) einen gebogenen Mittelteil beinhaltet, welcher von der reflektierenden Fläche abgeht (114).

3. System (110) nach dem vorhergehenden Anspruch, **dadurch gekennzeichnet, dass** mindestens ein gebogener Seitenabschnitt (204, 206) einen Winkel (208) zwischen 40° und 60°, und insbesondere einen Winkel von 50° mit einem Mittelteil der Wand (120) und/oder mit der reflektierenden Fläche (114) bildet.

4. System (110) nach einem der vorhergehenden Ansprüche, **dadurch gekennzeichnet, dass** die Wand (120) aus mindestens teilweise durchsichtigem oder durchscheinendem Glas oder Kunststoff besteht.

5. System (110) nach einem der vorhergehenden Ansprüche, **dadurch gekennzeichnet, dass** das System als längliche Rampe ausgebildet ist.

6. System (110) nach einem der vorhergehenden Ansprüche, **dadurch gekennzeichnet, dass** es zwei Reihen von Lichtquellen (116, 118) umfasst, wobei jede Reihe mehrere Lichtquellen (116, 118) umfasst, welche miteinander in einer Linie fluchtend in Längsrichtung des Fahrzeugs angeordnet sind.

7. System (110) nach dem vorhergehenden Anspruch, **dadurch gekennzeichnet, dass** die zwei Reihen von Lichtquellen (116,118) beidseitig der reflektierenden Fläche (114) angeordnet sind.

8. System (110) nach einem der Ansprüche 6 oder 7, **dadurch gekennzeichnet, dass** die zwei Reihen von Lichtquellen (116, 118) parallel zueinander verlaufen und sich an mindestens einem, insbesondere an jedem ihrer Enden treffen.

9. System (110) nach einem der Ansprüche 6 bis 8, **dadurch gekennzeichnet, dass** zwei angrenzende (116, 118) Quellen einer selben Reihe mit einem Längsabstand (502) kleiner oder gleich dem Durchmesser des Lichtstrahls beabstandet sind, welcher von jeder Lichtquelle (116, 118) abgegeben und in Höhe der Wand (120) gemessen wird.

10. System (110) nach einem der Ansprüche 6 bis 9, **dadurch gekennzeichnet, dass** die zwei Reihen von Lichtquellen (116, 118) mit einem Querabstand (124) kleiner oder gleich dem Durchmesser des Lichtstrahls voneinander beabstandet sind, welcher von jeder Lichtquelle (116, 118) abgegeben und in Höhe der Wand (120) gemessen wird.

11. System (110) nach einem der Ansprüche 6 bis 10, **dadurch gekennzeichnet, dass** die zwei Reihen von Lichtquellen (116, 118) in einer Entfernung (124) gleich der Entfernung (502) zwischen zwei angrenzenden Lichtquellen (116, 118) einer gleichen Reihe voneinander beabstandet sind.

12. System (110) nach einem der vorhergehenden Ansprüche, **dadurch gekennzeichnet, dass** mindestens eine Lichtquelle (116, 118) in Richtung der reflektierenden Fläche (114) in einem Winkel zwischen 30° und 50°, insbesondere in einem Winkel von 40°, zu der reflektierenden Fläche (114) ausgerichtet ist.

13. System (110) nach einem der vorhergehenden Ansprüche, **dadurch gekennzeichnet, dass** die reflektierende Fläche (114) als eine reflektierende, weiße Beschichtung ausgebildet ist.

14. System (110) nach dem vorhergehenden Anspruch, **dadurch gekennzeichnet, dass** die weiße Beschichtung durch Auftragung einer weißen Farbe erzielt wird.

15. System (110) nach einem der vorhergehenden Ansprüche, **dadurch gekennzeichnet, dass** mindestens eine Lichtquelle (116,118) aus einer LED oder einer Anordnung von LEDS gebildet ist.

16. Fahrzeug (100; 300), insbesondere Fahrzeug für den öffentlichen Verkehr, umfassend ein Beleuchtungssystem (110) nach einem der vorhergehenden Ansprüche.

17. Fahrzeug (100; 300) nach dem vorhergehenden Anspruch, **dadurch gekennzeichnet, dass** das Beleuchtungssystem (110) an einer oberen Wand (108) des Innenraums (102), insbesondere in Höhe eines Mittelteils der oberen Wand (108) in Breitenrichtung des Fahrzeugs (100; 300) angeordnet ist.

18. Fahrzeug (100; 300) nach einem der Ansprüche 16 oder 17, **dadurch gekennzeichnet, dass** das Beleuchtungssystem (110) in einer Aufnahme (112) angeordnet ist, welche im Innenraum (102), insbesondere auf/in einer oberen Wand (108) des Innenraums (102) vorgesehen ist.

19. Fahrzeug (100; 300) nach dem vorhergehenden Anspruch, **dadurch gekennzeichnet, dass** die Wand (120) eine Haube für mindestens einen Teil der Aufnahme bildet.

20. Fahrzeug (100; 300) nach einem der Ansprüche 18 oder 19, **dadurch gekennzeichnet, dass** die reflektierende Fläche (114) vom Innenraum (102) aus gesehen einen Boden der Aufnahme (112) bildet.

21. Fahrzeug (100; 300) nach einem der Ansprüche 18 bis 20, **dadurch gekennzeichnet, dass** die Aufnahme (112) länglich und an jedem ihrer vorderen und hinteren Enden abgerundet ist und in Längsrichtung des Fahrzeugs (100; 300) ausgerichtet ist.

22. Fahrzeug (100; 300) nach einem der Ansprüche 16 - 21, **dadurch gekennzeichnet, dass** es sich um einen, insbesondere elektrischen, Bus, Reisebus oder Straßenbahn-Bus handelt.

23. Fahrzeug (100; 300) nach einem der Ansprüche 16 - 21, **dadurch gekennzeichnet, dass** es sich um ein, insbesondere elektrisches, Flugzeug oder um ein, insbesondere elektrisches, Schiff handelt.

## Claims

1. Indirect lighting system (110) for lighting a passenger compartment (102) of a vehicle (100;300), said lighting system (110) comprising:
- at least one reflective surface (114) directed towards said passenger compartment (102),
- at least one light source (116,118) directed towards said reflective surface (114) so that the light radiation emitted by said at least one source (116,118) is reflected by said reflective surface (114) and sent back towards said passenger compartment (102), and
- at least one at least partially transparent or translucent partition (120) placed opposite the reflective surface (114) and through which the light radiation reflected by said reflective surface (114) passes, said partition (120) having a transparent or translucent central part and, on at least one of its sides, a lateral portion curved or folded towards the reflective surface (114);
**characterized in that** each curved or folded lateral portion (204,206) of the partition (120) has a transparency greater than the rest of said partition (120) so that the partition (120) provides stronger lighting at each curved or folded lateral portion (204,206).

2. System (110) according to the preceding claim, **characterized in that** the partition (120) has a central part curving away from the reflective surface (114).

3. System (110) according to the preceding claim, **characterized in that** at least one folded lateral portion (204,206) forms an angle (208) comprised between 40° and 60°, and in particular an angle of 50°, with a central part of the partition (120) and/or with the reflective surface (114).

4. System (110) according to any one of the preceding claims, **characterized in that** the partition (120) is made from glass or plastic that is at least partially transparent or translucent.

5. System (110) according to any one of the preceding claims, **characterized in that** said system is in the form of a longitudinal striplight.

6. System (110) according to any one of the preceding claims, **characterized in that** it comprises two rows of light sources (116,118), each row comprising several light sources (116,118) aligned with one another and extending in the longitudinal direction of the vehicle.

7. System (110) according to the preceding claim, **characterized in that** the two rows of light sources (116,118) are placed on either side of the reflective surface (114).

8. System (110) according to any one of claims 6 or 7, **characterized in that** the two rows of light sources (116,118) are parallel to one another and meet at one at least, in particular each, of their ends.

9. System (110) according to any one of claims 6 to 8, **characterized in that** two adjacent sources (116,118) of one and the same row are separated by a longitudinal separation distance (502) smaller than or equal to the diameter of the light beam emitted by each light source (116,118) and measured at the partition (120).

10. System (110) according to any one of claims 6 to 9, **characterized in that** the two rows of light sources (116,118) are separated from one another by a transverse separation distance (124) smaller than or equal to the diameter of the light beam emitted by each source (116,118) and measured at the partition (120).

11. System (110) according to any one of claims 6 to 10, **characterized in that** the two rows of light sources (116,118) are separated from one another by a distance (124) equal to the distance (502) separating two adjacent sources (116,118) of one and the same row.

12. System (110) according to any one of the preceding claims, **characterized in that** at least one light source (116,118) is directed towards the reflective surface (114) at an angle comprised between 30° and 50°, in particular at an angle of 40°, with respect to said reflective surface (114).

13. System (110) according to any one of the preceding claims, **characterized in that** the reflective surface (114) is made from a white reflective coating.

14. System (110) according to the preceding claim, **characterized in that** the white coating is obtained by deposition of a white paint.

15. System (110) according to any one of the preceding claims, **characterized in that** at least one light source (116,118) is formed by an LED or an LED assembly.

16. Vehicle (100;300), in particular a public transport vehicle, comprising a lighting system (110) according to any one of the preceding claims.

17. Vehicle (100;300) according to the preceding claim, **characterized in that** the lighting system (110) is arranged on an upper panel (108) of the passenger compartment (102), in particular at a central part of said upper panel (108) in the width direction of said vehicle (100;300).

18. Vehicle (100;300) according to any one of claims 16 or 17, **characterized in that** the lighting system (110) is arranged in a cell (112) provided in the passenger compartment (102), in particular on/in an upper panel (108) of the passenger compartment (102).

19. Vehicle (100;300) according to the preceding claim, **characterized in that** the partition (120) forms a cover for at least a part of the cell (112).

20. Vehicle (100;300) according to any one of claims 18 or 19, **characterized in that** the reflective surface (114) forms a bottom of the cell (112), seen from the passenger compartment (102).

21. Vehicle (100;300) according to any one of claims 18 to 20, **characterized in that** the cell (112) is longitudinal and rounded at each of its front and back ends, in the longitudinal direction of the vehicle (100;300).

22. Vehicle (100;300) according to any one of claims 16 to 21, **characterized in that** it is a bus, or a coach, or a tyred tram, in particular electric.

23. Vehicle (100;300) according to any one of claims 16 to 21, **characterized in that** it is an airplane, in particular electric, or a boat, in particular electric.
